# EUROPEAN PATENT APPLICATION

(11) **EP 3 860 284 A1**
(43) Date of publication of application: **04.08.2021**
(21) Application number: 18935676.9
(22) Date of filing: 28.09.2018
(51) Int. Cl.: H04W 72/12, H04W 16/28, H04W 88/02

(54) **USER TERMINAL**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); GUO, Shaozhen, Beijing 100190 (CN); HOU, Xiaolin, Beijing 100190 (CN)
(74) Representative: Hoffmann Eitle
(86) International application number: PCT/JP2018/036590
(87) International publication number: WO 2020/066021

(57) **Abstract**

In order to appropriately control repetition transmission using one or more transmission/reception points, user terminal according to one aspect of the present disclosure includes: a control section that determines a given condition applied to each repetition of repetition transmission based on a set of transmission parameters configured for each repetition and information included in downlink control information instructing the repetition transmission; and a receiving section that receives a downlink shared channel repeatedly transmitted from one or more transmission/reception points based on the given condition.

## Description

### Technical Field

The present disclosure relates to user terminal in a next-generation mobile communication system.

### Background Art

In the universal mobile telecommunications system (UMTS) network, the specifications of Long Term Evolution (LTE) have been drafted for the purpose of further increasing high speed data rates, providing lower delays and the like (see Non Patent Literature 1). Further, the specifications of LTE-Advanced (third generation partnership project (3GPP) Rel. (Release) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), new radio (NR), or 3GPP Rel. 15 or later) are also being studied.

In the existing LTE system (for example, 3GPP Rel. 8 to 14), user equipment (UE) receives a downlink shared channel (for example, a physical downlink shared channel (PDSCH)) scheduled by downlink control information (DCI). Further, the UE transmits uplink control information (UCI) by using at least one of a UL data channel (e.g., a PUSCH (Physical Uplink Shared Channel)) and a UL control channel (e.g., a PUCCH (Physical Uplink Control Channel)).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (for example, NR, 5G, 5G+ or Rel. 15 or later), it is under study to perform communication using beam forming (BF). Therefore, it is under study for the user terminal to control reception processing (for example, at least one of demapping, demodulation, and decoding) of a channel/signal based on information that relates to quasi co-location (QCL) (QCL information) of at least one (channel/signal) of a given channel and signal.

The QCL information of the given channel/signal (for example, PDSCH, PDCCH, and the like) is also referred to as a transmission configuration indication or transmission configuration indicator (TCI) state (TCI state) of the given channel/signal.

In the NR, it is also under study to perform repetition in UL transmission and DL transmission. Further, it is also under study to perform the repetition transmission by using different transmission and reception points (TRPs) every given number of repetitions (for example, every one repetition).

When the repetition transmission is performed using a plurality of TRPs, how to control transmission conditions or reception conditions for each repetition becomes a problem. From the viewpoint of flexibly performing the repetition transmission using a plurality of TRPs according to the communication environment or the like, it is desirable to flexibly control the conditions for each repetition, but sufficient study has not been made on how to control them.

Therefore, an object of the present disclosure is to provide user terminal capable of appropriately controlling the repetition transmission using one or more transmission/reception points.

### Solution to Problem

User terminal according to one aspect of the present disclosure includes: a control section configured to determine a given condition applied to each repetition of repetition transmission based on a set of transmission parameters configured for each repetition of repetition transmission and information included in downlink control information that instructs the repetition transmission; and a receiving section configured to receive a downlink shared channel repeatedly transmitted from one or more transmission/reception points based on the given condition.

### Advantageous Effects of Invention

According to one aspect of the present disclosure, the repetition transmission using one or more transmission/reception points can be appropriately controlled.

### Brief Description of Drawings

Figs. 1A and 1B are diagrams illustrating an example of repetition transmission using a plurality of TRPs.
Fig. 2 is a diagram illustrating an example of a QCL index and an RV index corresponding to repetition.
Fig. 3 is a diagram illustrating an example of a TRP index and an RV index specified by DCI for each repetition.
Fig. 4 is a diagram illustrating an example of a schematic configuration of a radio communication system according to one embodiment.
Fig. 5 is a diagram illustrating an example of a configuration of a base station according to one embodiment.
Fig. 6 is a diagram illustrating an example of a configuration of user terminal according to one embodiment.
Fig. 7 is a diagram illustrating an example of a hardware configuration of the base station and the user terminal according to one embodiment.

### Description of Embodiments

### (Repetition Transmission)

In the NR, it has been studied that multi-slot transmission is performed for channels such as a PUCCH, a PUSCH, a PDSCH, and a PDCCH. The multi-slot transmission is transmission over multiple slots, and may be called slot aggregation, repetition transmission, or the like. The multi-slot transmission can be expected to expand coverage, improve quality in reception, and the like.

For example, when the UE is configured to perform the repetition transmission of a certain channel using higher layer signaling, physical layer signaling, or a combination thereof, it may perform the repetition transmission of the channel or may receive a channel that has been repeatedly transmitted. In each slot of the multi-slot transmission, signals having the same contents may be transmitted, or signals having different contents may be transmitted.

Note that in the present disclosure, the higher layer signaling may be, for example, any one of radio resource control (RRC) signaling, medium access control (MAC) signaling, broadcast information, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), other system information (OSI), or the like.

The physical layer signaling may be, for example, downlink control information (DCI).

For the PUSCH repetition, a repetition number may be configured in the UE by higher layer signaling (e.g., RRC parameter "aggregationFactorUL" for the PUSCH, and RRC parameter "repK" for the configured grant PUSCH). For example, 1, 2, 4, 8, or the like may be configured as a repetition number of the PUSCH repetition. Further, the redundancy version (RV) of the PUSCH in each slot during the PUSCH repetition transmission may be different, or may be the same.

The PUCCH repetition may be configured for the UE for a particular format (e.g., PUCCH formats 1, 3, and 4 with a transmission period of equal to or more than four symbols). The repetition number (repetition factor, e.g., parameter "nrofSlots" included in "PUCCH-FormatConfig" of the RRC) may be configured in common for all the PUCCH formats 1, 3, and 4.

For the PDSCH repetition, a repetition number may be configured by higher layer signaling (e.g., RRC parameter "aggregationFactorDL" for the PDSCH). For example, 1, 2, 4, 8, or the like may be configured as a repetition number of the PDSCH repetition.

Note that, in the present disclosure, the repetition number, the repetition factor, the repetition coefficient, and K may be read interchangeably. Further, the repetition number may represent the repetition number of a specific UL transmission (for example, PUSCH, PUCCH) or DL transmission (for example, PDSCH, PDCCH).

Further, in the NR, it is under study to transmit at least one of a channel and a signal (channel/signal) repeatedly assuming a plurality of transmission and reception points (TRPs).

The channel/signal includes but not limited to, for example, PDSCH, PDCCH, PUSCH, PUCCH, DL-RS, an uplink reference signal (UL-RS), or the like.

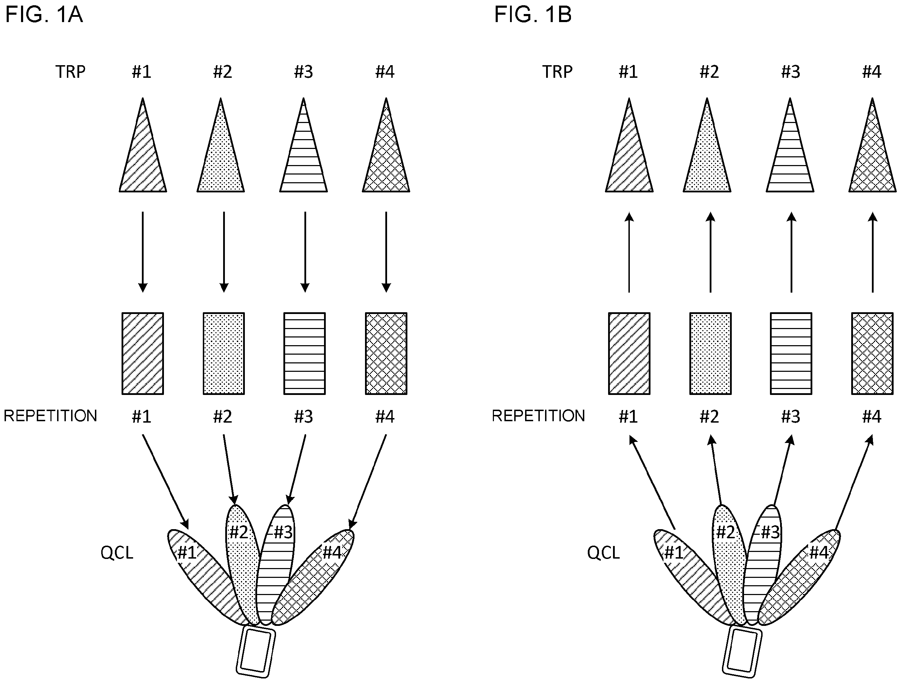

Figs. 1A and 1B are diagrams illustrating an example of repetition transmission of a channel/signal using a plurality of TRPs. For example, Fig. 1A illustrates an example of the repetition transmission of a downlink channel (e.g., PDSCH) using TRPs #1 to #4, and Fig. 1B illustrates an example of the repetition transmission of an uplink channel (e.g., PUSCH or PUCCH) using TRPs #1 to #4.

Fig. 1 illustrates an example in which TRPs #1 to #4 have different geographical positions (TCI state or quasi co-location). For example, here, TRP #1 corresponds to QCL #1, TRP #2 corresponds to QCL #2, TRP #3 corresponds to QCL #3, and TRP #4 corresponds to QCL #4, but this is by no means limiting. Further, TRPs #1 to #4 may be different antenna panels installed at the same transmission location. Further, the number of TRPs used for repetition transmission is not limited to that illustrated in the drawings.

Note that the term "TRP" may be replaced with another term such as network, base station, antenna equipment, antenna panel, serving cell, cell, component carrier (CC), or carrier. Further, with respect to different transmission/reception signals or channels, "TRP is the same" may be paraphrased as TCI state, QCL, or QCL relationship, precoding, beam forming, or spatial reception parameter is the same between different transmission/reception signals or channels or between their reference signals. Further, with respect to different transmission/reception signals or channels, "TRP is different" may be paraphrased as TCI state, QCL, or QCL relationship, precoding, beam forming, or spatial reception parameter is different between different transmission/reception signals or channels or between their reference signals.

### (QCL)

Quasi-co-location (QCL) is an index indicating statistical properties of channels/signals, and is also called a quasi co-location. The user equipment (UE) may control reception processing or transmission processing of a given channel/signal based on information (QCL information) that relates to a QCL of at least one (channel/signal) of the given channel and signal. The reception processing corresponds to, for example, at least one of demapping, demodulation, and decoding. The transmission processing corresponds to at least one of mapping, modulation, and encoding.

For example, when one signal and another signal have a QCL relationship, this may mean that it is possible to assume that at least one of Doppler shift, Doppler spread, average delay, delay spread, and spatial parameter (for example, spatial reception parameter (spatial Rx parameter)) is identical (the QCL holds for the at least one of those parameters) between a plurality of those different signals.

Note that the spatial reception parameter may correspond to a reception beam (for example, reception analog beam) or a transmission beam (for example, transmission analog beam) of the user terminal, and the beam may be specified based on spatial QCL. In the present disclosure, the QCL and at least one element of the QCL, may be read as sQCL (spatial QCL).

A plurality of types of QCL (QCL type) may be defined. For example, four QCL types A to D with different parameters (or parameter sets) that can be assumed to be identical may be provided. These parameters are as follows:
- QCL type A: Doppler shift, Doppler spread, average delay, and delay spread,
- QCL Type B: Doppler shift and Doppler spread,
- QCL type C: Doppler shift and average delay, and
- QCL type D: spatial reception parameter.

The Transmission Configuration Indication or Transmission Configuration Indicator (TCI) state (TCI state) may indicate the QCL information of a given channel/signal (for example, PDSCH, PDCCH, PUCCH, or

### PUSCH).

The TCI state may be identified by a given identifier (TCI state ID (TCI-StateId)), and may indicate (include) information (QCL information (QCL-Info))that relates to QCL of a target channel/signal (or a reference signal (or an antenna port of the reference signal) for the channel) and another signal (for example, another downlink reference signal (DL-RS) or uplink reference signal (UL-RS)).

The QCL information may include at least one of, for example, information (RS relation information) that relates to a DL-RS or a UL-RS (hereinafter, also simply referred to as an RS) having a QCL relationship with the target channel/signal, information (QCL type information) that indicates the above-described QCL type, and information that relates to a carrier (cell) and a BWP in which the RS is arranged.

The RS relation information may include information that indicates at least one of the RS that has the QCL relationship with the target channel/signal and a resource of the RS. For example, when a plurality of reference signal sets (RS sets) are configured to the user terminal, the RS relation information may indicate at least one of an RS that has the QCL relationship with a channel (or a port for the channel) among RSs included in the RS set, a resource for the RS, and the like.

The DL-RS may be at least one of, for example, a Synchronization Signal (SS), a broadcast channel (PBCH: Physical Broadcast Channel), a Synchronization Signal Block (SSB), a Mobility Reference Signal (MRS), a Channel State Information Reference Signal (CSI-RS), a CSI-RS for tracking and a beam-specific signal, and the like, or a signal that is configured by expanding or changing such signals (e.g., a signal that is configured by changing at least one of density and periodicity).

The synchronization signal may be at least one of, for example, a Primary Synchronization Signal (PSS) and a Secondary Synchronization Signal (SSS). The SSB is a signal block including a synchronization signal and a physical broadcast channel, and may be referred to as an SS/PBCH block or the like.

The UL-RS may be, for example, a Sounding Reference Signal (SRS).

By the way, as described above, in the NR, it is also under study to perform the repetition transmission using a plurality of transmission/reception points. When the repetition transmission is performed using a plurality of TRPs, how to control transmission conditions or reception conditions for each repetition becomes a problem. From the viewpoint of flexibly performing the repetition transmission using a plurality of TRPs based on the communication environment, it is desirable to flexibly control the conditions for each repetition, but sufficient study has not been made on how to control them.

The present inventors have conceived that the repetition transmission using a plurality of transmission/reception points can be flexibly controlled by configuring transmission parameters for each repetition included in the repetition transmission.

Hereinafter, embodiments according to the present disclosure will be described in detail with reference to the drawings. The following configurations may be applied singly or in combination.

### (Notification of conditions for each repetition)

A method of notifying the UE of a given condition (or a given transmission parameter) applied to each repetition of repetition transmission from a base station when applying the repetition transmission using one or more TRPs will be described below. Note that the repetition transmission described below may be applied to the downlink channel (for example, PDSCH) and the uplink channel (for example, PUSCH and PUCCH). Further, in the following description, the given channel may be read as the PDSCH, the PUSCH or the PUCCH.

The base station may notify the UE of information that relates to the TRP corresponding to each repetition of the repetition transmission (or the TRP in which each repetition transmission is performed). The information that relates to the TRP (also referred to as TRP relation information) may include at least one of quasi co-location (QCL index or QCL-reference), TCI state (or TCI index), precoder, reference signal index (RS index), TRP index and SRS resource indicator (SRI).

In the following description, the QCL index will be used as an example for the TRP relation information, but the QCL index may be read as one of the TCI state (or TCI index), precoder, reference signal index, TRP index, and

### SRI.

The base station may notify the UE of a set of sequences of TRP relation information (QCL index or QCL-reference) applied to the repetition transmission.

Further, when the repetition transmission is applied to a given channel, the base station may notify the UE of at least one of the information that relates to the number of times of repetition transmission (also referred to as repetition factor K) and the information that relates to the redundancy version applied to each repetition (hereinafter also referred to as RV information). For example, the base station may specify the association of the TRP relation information and the RV information in the UE as a given condition (or a given parameter) applied to each repetition. Alternatively, the base station may specify to the UE the association of the TRP relation information, the RV information, and the repetition factor as a given condition applied to each repetition.

For example, the base station may use higher layer signaling (e.g., RRC signaling, or broadcast information, or the like) to notify the UE of a candidate set of transmission parameters applied to each repetition of the repetition transmission, and may use downlink control information (e.g., DCI) to specify a specific candidate set.

Note that the candidate set of transmission parameter may be a candidate set of the TRP relation information (for example, TRP relation information sequence) or a candidate set of the RV information (for example, RV sequence). Alternatively, the candidate set of transmission parameter may be a combination of a candidate set of the TRP relation information (for example, a sequence set of QCL index) and a candidate set of the RV information (for example, a sequence set of RV index).

The UE can determine the transmission condition of each repetition by cycling values configured by the TRP relation information sequence and the RV sequence according to the repetition transmission (repetition factor) specified by the base station.

The notification control using the higher layer and the notification control using the DCI will be described below. Note that in the following description, one piece of DCI may be configured to be transmitted for the repetition transmission, or may be configured to be transmitted for each repetition of the repetition transmission.

### <Notification control by higher layer>

The base station may configure the information described below to the UE by using the higher layer signaling.

### [Sequence set of TRP relation information]

The base station may configure a given set (e.g., M set) of the sequence of the QCL index (or QCL-reference) applied to the repetition transmission to the UE with respect to N TRPs. M and N may have the same value or different values. The sequence of QCL index may be associated with the QCL index corresponding to each repetition.

In the UE, a sequence of M (M ≥ 1) types of QCL index for a given channel may be configured by higher layer signaling. Note that the number of sets M of the sequence of QCL index configured to the UE may be determined by at least one of the UE capability, the QCL type, and the number of TRPs.

The DCI corresponding to a given channel (e.g., the DCI used to schedule a given channel) may include a given field that specifies the sequence of a particular QCL index.

If the number of sets M of QCL index configured to the UE is larger than a given number x (for example, x = 8), MAC CE may be used to activate (specify) eight or less QCL indexes. The value of the given field in the DCI may indicate one of the TCI states or the SRS resources activated by the MAC CE.

When the number of sets M of sequence of QCL index configured to the UE is equal to or less than a given number x (for example, x = 8), a specific sequence set may be specified in the UE by using the DCI.

The UE selects a sequence of a specific QCL index from a plurality of sets of sequence of QCL index (sequence candidate set) configured in the higher layer based on the given field included in the DCI.

The format of the sequence may be configured as described, for example, below. Note that N, i, j, g ≥ 1 may be possible.

{(1st QCL index of TRP #1, 2nd QCL index of TRP #1, ... i-th QCL index of TRP #1), (1st QCL index of TRP #2, 2nd QCL index of TRP #2, ... j-th QCL index of TRP #2), ... (1st QCL index of TRP #N, 2nd QCL index of TRP #N, ... g-th QCL index of TRP #N)}

For example, the case that the number of TRPs is 2 (N = 2), the sequence of CQI index is {(1,2), (3,4)}, and the repetition number is 4 (K = 4) is assumed. In such a case, for each repetition (k = 0 to 3), the QCL index #1 (k = 0) corresponding to TRP #1, the QCL index #2 (k = 1) corresponding to TRP #1, the QCL index #3 (k = 2) corresponding to TRP #2, and the QCL index #4 (k = 3) corresponding to TRP #2 are applied.

The base station may configure a QCL index corresponding to the same TRP for different repetitions. In this case, the QCL index may be the same or different.

### [Repetition number]

The base station may notify the UE of information that relates to the maximum value (for example, y) of repetition number applied to the repetition transmission by higher layer signaling. In this case, the base station may specify the repetition factor K (K ≤ y) in the UE by using the DCI. This makes it possible to dynamically control the repetition number applied to the repetition transmission.

### [RV sequence]

The base station may configure information that relates to the redundancy version (RV) sequence corresponding to each repetition to the UE by higher layer signaling.

The RV is used for encoding and rate matching of data, and indicates the difference in redundancy of the data. A redundancy version value (RV value) is, for example, 0, 1, 2, or 3, and 0 is preferably used for initial transmission because the degree of redundancy is the lowest.

For example, by applying a different RV value for each transmission of data (e.g., UL data) with the same HARQ process number (HPN), a probability that the data can be normally received (decoded) can be increased and a gain of HARQ can be effectively obtained. For example, the base station may configure {0,0,0,0}, {0,3,0,3}, {0,3,2,1}, or the like in the UE as the RV sequence for repetition.

Further, the base station may configure a combination candidate of the sequence of QCL index and the RV sequence to the UE by higher layer signaling, and specify a specific combination by using the DCI.

The UE may cycle and apply the configured QCL index sequence and RV sequence for K repetitions. That is, the cycling of QCL index sequence (QCL-references sequence cycling) and the cycling of the RV sequence (RV sequence cycling) are applied for the repetition.

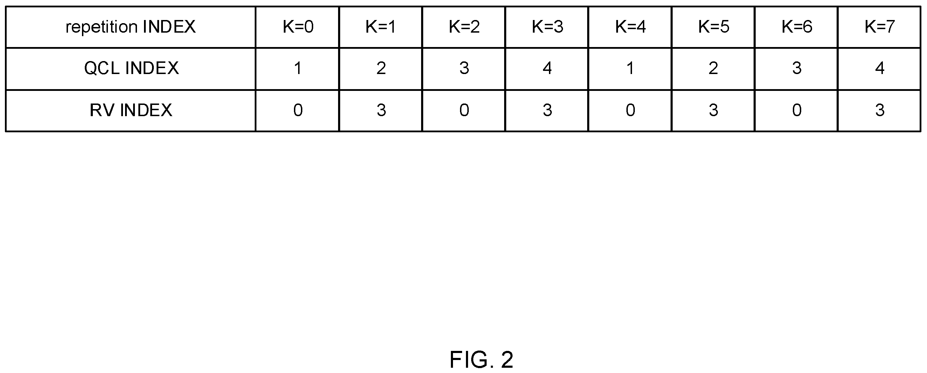

Fig. 2 illustrates a relationship between QCL index and repetition index of a case where the number of TRPs is 2 (N = 2), the sequence of QCL index is {(1,2), (3,4)}, the RV sequence is {0,3,0,3}, and the repetition factor is 8 (K = 8), and the RV index. The UE may cycle and apply the QCL index and the RV index configured for eight repetitions.

### <Notification control by DCI>

The base station specifies a specific candidate from the candidate sets configured by the higher layer (for example, at least one of the QCL index sequence set and the RV index sequence set) to the UE using the DCI. For example, the base station uses a bit (or code point) of a given field contained in the DCI to specify information that relates to a TRP (for example, TRP relation information) and information that relates to an RV value applied to each repetition.

### [PUSCH]

The case where the repetition transmission is applied to the PUSCH is assumed. The frequency-hopping indication field included in the DCI of Rel. 15 is configured using 1 or 2 bits of the most significant bits (MSB bits) of the resource allocation (for example, type 1 resource allocation).

On the other hand, in a given communication service (for example, URLLC), the case in which a TTI with a short communication processing unit is applied, a low modulation/coding method (low MCS index) is applied, and a wide bandwidth is used is assumed. Therefore, the frequency diversity gain has already been sufficiently obtained, and the effect obtained by frequency hopping becomes small.

Therefore, the field that specifies the TRP relation information may be configured by using two bits of the most significant bits of the resource allocation. On the other hand, the field that specifies the frequency hopping need not be configured. The UE may assume that the field that specifies the TRP relation information and the field that specifies the frequency hopping are not configured at the same time.

The field that specifies the TRP relation information may also be referred to as a precoder-cycling indication field, a QCL-cycling indication field, an SRI-cycling indication field, or a precoder/QCL/SRI-cycling indication field.

Alternatively, the field that specifies the TRP relation information may be configured by using one bit of the most significant bits of the resource allocation. In this case, the field that specifies the frequency hopping may be configured by one bit.

Note that the field that specifies the TRP relation information may be configured by using some or all bits of other fields included in the DCI, or may be newly configured.

### [PDSCH]

The case where the repetition transmission is applied to the PDSCH is assumed. The virtual resource block-physical resource block mapping indication field (VRB-to-PRB mapping indication field) included in the DCI of Rel. 15 is configured by one bit.

On the other hand, in a given communication service (for example, URLLC), the case in which a TTI with a short communication processing unit is applied, a low modulation/coding method (low MCS index) is applied, and a wide bandwidth is used is assumed. Therefore, the frequency diversity gain has already been sufficiently obtained, and the effect obtained by applying the interleave (mapping from the virtual resource block to the physical resource block) is small.

Therefore, the field that specifies the TRP relation information may be configured by using the virtual resource block-physical resource block mapping indication field. On the other hand, the virtual resource block-physical resource block mapping indication field need not be configured. The UE may assume that the field that specifies the TRP relation information and the virtual resource block-physical resource block mapping indication field are not configured at the same time.

Note that the field that specifies the TRP relation information may be configured by using some or all bits of other fields included in the DCI, or may be newly configured.

The notification of the sequence of the TRP relation information (e.g., QCL index) (also called QCL cycling sequence), the notification of RV sequence, and the repetition factor may be transmitted in different fields of the DCI or may be transmitted by using the same field (joint field).

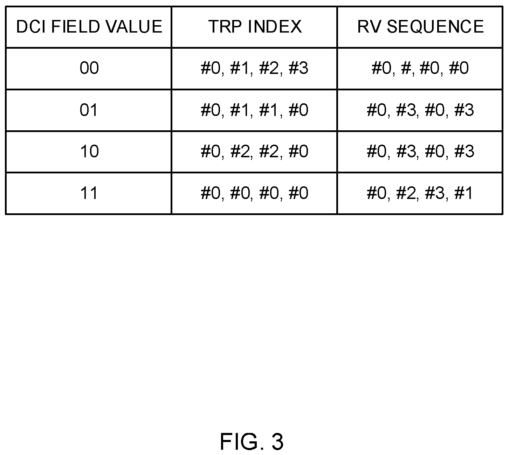

Fig. 3 illustrates an example of a table in which the sequence of TRP relation information (e.g., a TRP index sequence) and the RV sequence are associated and defined. In this case, the UE may determine the TRP relation information (e.g., TRP index) and the value of the RV corresponding to each repetition based on a given field included in the DCI.

In Fig. 3, when the given field is '00', a different TRP (here, TRPs #0 to #3) is configured for each repetition. For example, when the repetition factor is 4, the repetition transmission is performed four times using different TRPs. For example, when the base station cannot determine which TRP is appropriate for the UE, the base station configures the repetition transmission using a plurality of TRPs.

In this case, the RV sequence (the value of the RV corresponding to each repetition) is preferably the same value (for example, #0). That is, when the TRP index of each repetition is configured differently (or cyclically), the value of the RV corresponding to each repetition is configured fixedly. Thus, even when a different TRP is applied to each repetition, reception processing such as decoding can be appropriately performed for the channel corresponding to each repetition.

In Fig. 3, when the given field is '01', a plurality of TRPs (here, TRPs #0 and #1) are configured for each repetition and the same TRP is configured for some repetitions. For example, when the repetition factor is 4, four repetitions are performed using each of TRPs #0 and #1 twice. For example, when it can be determined that TRPs #0 and #1 are suitable for the UE, the base station configures the repetition transmission using some TRPs among the plurality of TRPs.

In this case, it is preferable that different values (e.g., #0 and #3) are applied to the RV sequence (the value of the RV corresponding to each repetition) for different repetitions corresponding to the same TRP (e.g., TRP #0). Thus, channels to which different RVs have been applied can be received in the different repetitions using the same TRP, so that the probability of success of reception can be improved.

In Fig. 3, when the given field is '10', a plurality of TRPs (here, TRPs #0 and #2) are configured for each repetition and the same TRP is configured for some repetitions. For example, when the repetition factor is 4, four repetitions are performed using each of TRPs #0 and #2 twice. For example, when it can be determined that TRPs #0 and #2 are suitable for the UE, the base station configures the repetition transmission using some TRPs among the plurality of TRPs.

In Fig. 3, when the given field is '11', the same TRP (here, TRP #0) is configured for each repetition. For example, when the repetition factor is 4, the repetition transmission is performed four times using the same TRP. For example, when it can be determined that a specific TRP (here TRP #0) is suitable for the UE, the base station configures the repetition transmission using the specific TRP among the plurality of TRPs.

In this case, the RV sequence (the value of the RV corresponding to each repetition) is preferably a different value (for example, #0, #2, #3, and #1). That is, when the TRP index of each repetition is configured to be the same (or fixedly), the value of the RV corresponding to each repetition is configured differently (or cyclically). Thus, channels to which different RVs have been applied can be received when the same TRP is applied to each repetition, so that the probability of success of reception can be improved.

### (Radio Communication System)

A configuration of a radio communication system according to one embodiment of the present disclosure is hereinafter described. In this radio communication system, communication is performed using one or a combination of the radio communication methods according to the embodiments of the present disclosure.

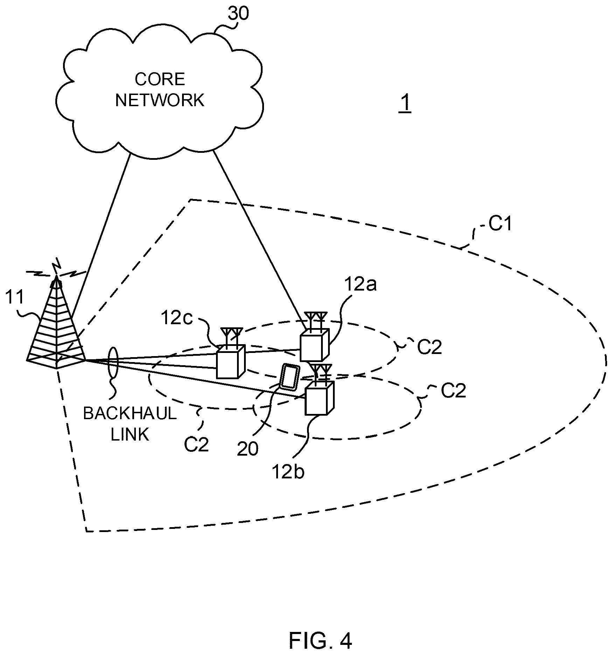

Fig. 4 is a diagram illustrating an example of a schematic configuration of a radio communication system according to one embodiment. A radio communication system 1 may be a system that implements communication using long term evolution (LTE), 5th generation mobile communication system new radio (5G NR), and the like drafted as the specification by third generation partnership project (3GPP) .

Further, the radio communication system 1 may support dual connectivity (multi-RAT dual connectivity (MR-DC)) between a plurality of radio access technologies (RATs). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in a single RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. User terminal 20 may be located in at least one cell. The arrangement, number, and the like of cells and the user terminal 20 are not limited to the aspects illustrated in the drawings. Hereinafter the base stations 11 and 12 will be collectively referred to as base stations 10 unless specified otherwise.

The user terminal 20 may be connected to at least one of the plurality of base stations 10. The user terminal 20 may use at least one of carrier aggregation and dual connectivity (DC) using a plurality of component carriers (CC).

Each CC may be included in at least one of a frequency range 1 (FR1) and a frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency ranges, definitions, and the like of FR1 and FR2 are not limited to these, and, for example, FR1 may correspond to a frequency range higher than FR2.

Further, the user terminal 20 may perform communication in each CC using at least one of time division duplex (TDD) and frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, as a downlink channel, a physical downlink shared channel (PDSCH) shared by each user terminal 20, a physical broadcast channel (PBCH), a physical downlink control channel (PDCCH), or the like may be used.

Further, in the radio communication system 1, as an uplink channel, a physical uplink shared channel (PUSCH) shared by each user terminal 20, a physical uplink control channel (PUCCH), a physical random access channel (PRACH), or the like may be used.

User data, higher layer control information, and a system information block (SIB) and the like are transmitted by the PDSCH. The PUSCH may transmit user data, higher layer control information, and the like. Further, the PBCH may transmit a master information block (MIB).

The PDCCH may transmit lower layer control information. The lower layer control information may include, for example, downlink control information (DCI) including scheduling information of at least one of the PDSCH and the PUSCH.

Note that DCI that schedules the PDSCH may be referred to as DL assignment, DL DCI, or the like, and DCI that schedules the PUSCH may be referred to as UL grant, UL DCI, or the like. Note that the PDSCH may be replaced with DL data, and the PUSCH may be replaced with UL data.

A control resource set (CORESET) and a search space may be used to detect the PDCCH. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

By means of the PUCCH, channel state information (CSI), delivery acknowledgement information (for example, hybrid automatic repeat request (HARQ-ACK), which may be referred to as ACK/NACK or the like), scheduling request (SR), and the like may be transmitted. By means of the PRACH, a random access preamble for establishing a connection with a cell may be transmitted.

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as the DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. Note that the SS, the SSB, or the like may also be referred to as a reference signal.

Further, in the radio communication system 1, a sounding reference signal (SRS), a demodulation reference signal (DMRS), and the like may be transmitted as an uplink reference signal (UL-RS). Note that, the DMRS may be referred to as a "user equipment-specific reference signal (UE-specific Reference Signal)".

### (Base station)

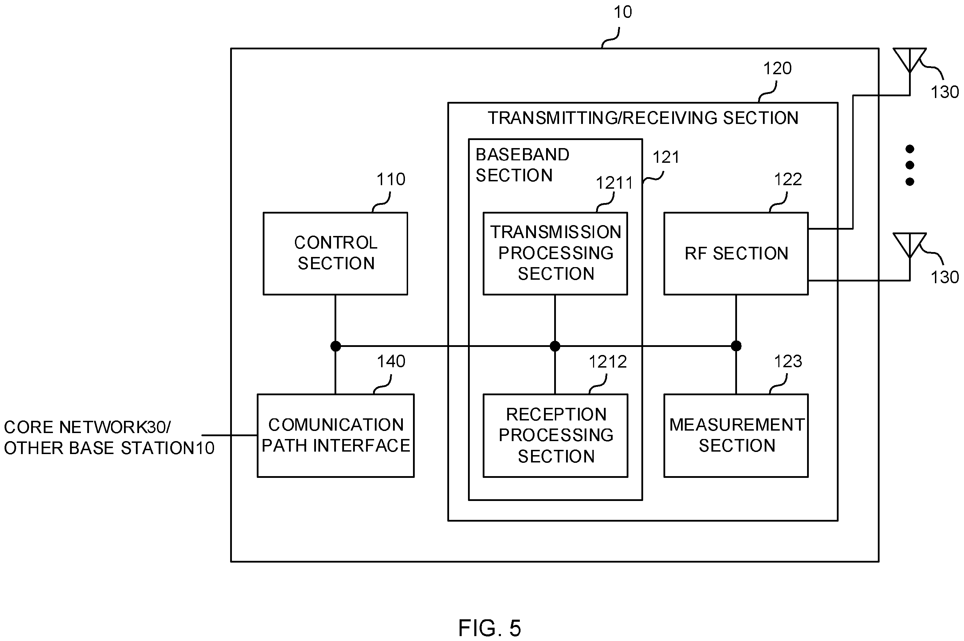

Fig. 5 is a diagram illustrating an example of a configuration of a base station according to one embodiment. The base station 10 includes a control section 110, a transmitting/receiving section 120, a transmission/reception antenna 130, and a communication path interface 140. Note that one or more of the control sections 110, one or more of the transmitting/receiving sections 120, one or more of the transmission/reception antennas 130, and one or more of the communication path interfaces 140 may be included.

Note that, although this example primarily indicates functional blocks of characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the communication path interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or release) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may be constituted by the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog transform on the bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital transform, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The communication path interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmitting section and the receiving section of the base station 10 in the present disclosure may be constituted by at least one of the transmitting/receiving section 120, the transmission/reception antenna 130, and the communication path interface 140.

Note that the transmitting/receiving section 120 may repeatedly transmit the downlink shared channel using one or more transmission/reception points. Further, the transmitting/receiving section 120 may receive an uplink channel (for example, PUSCH or PUCCH) repeatedly transmitted from the UE by using one or more transmission/reception points.

The control section 110 performs control to configure a set of transmission parameters for each repetition of the repetition transmission in the UE using higher layer signaling, and notify the UE of a given condition applied to each repetition based on the information included in the downlink control information instructing the repetition transmission.

### (User terminal)

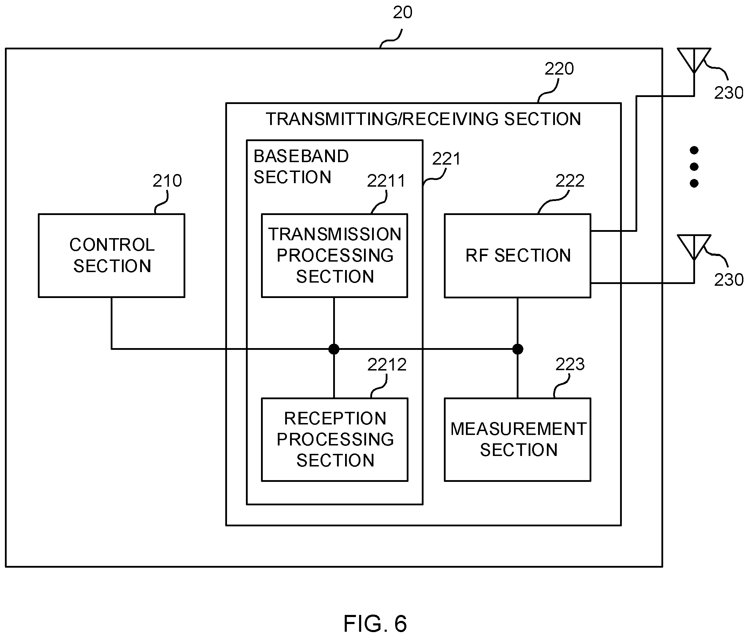

Fig. 6 is a diagram illustrating an example of a configuration of user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 220 may be constituted as an integrated transmitting/receiving section, or may be constituted by a transmitting section and a receiving section. The transmitting section may be constituted by the transmission processing section 2211 and the RF section 222. The receiving section may be constituted by the reception processing section 2212, the RF section 222, and the measurement section 223.

The transmission/reception antenna 230 can be constituted by an antenna described based on common recognition in the technical field to which the present disclosure relates, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a baseband signal.

Note that whether or not to apply DFT processing may be based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When it is not the case, DFT processing need not be performed as the transmission processing.

The transmitting/receiving section 220 (RF section 222) may perform modulation to a radio frequency band, filtering processing, amplification, and the like on the baseband signal, and may transmit a signal in the radio frequency band via the transmission/reception antenna 230.

Meanwhile, the transmitting/receiving section 220 (RF section 222) may perform amplification, filtering processing, demodulation to a baseband signal, and the like on the signal in the radio frequency band received by the transmission/reception antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, or PDCP layer processing on the acquired baseband signal.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220, the transmission/reception antenna 230, and the communication path interface 240.

Note that the transmitting/receiving section 220 may repeatedly transmit an uplink channel (for example, PUSCH or PUCCH) to one or more transmission/reception points. Further, the transmitting/receiving section 220 may receive a downlink shared channel (for example, PDSCH) repeatedly transmitted from one or more transmission/reception points.

The control section 210 may determine a given condition applied to each repetition based on a set of transmission parameters configured for each repetition in the repetition transmission and information included in the downlink control information instructing the repetition transmission.

The transmission parameter may include information that relates to the transmission/reception point corresponding to each repetition and information that relates to the redundancy version in association with each other. Alternatively, the transmission parameter may include information that relates to at least one of quasi co-location, TCI state, precoder, transmission/reception point index, and reference signal index corresponding to each repetition, information that relates to the number of times of repetition, and information that relates to the redundancy version.

Further, when the same transmission point is configured for a plurality of repetitions, the control section 210 may perform control to apply different redundancy versions to the plurality of repetitions. Alternatively, when different transmission points are configured for a plurality of repetitions, the control section 210 may perform control to apply the same redundancy version to the plurality of repetitions.

### (Hardware Configuration)

Note that the block diagrams that have been used to describe the above embodiments illustrate blocks in functional units. These functional blocks (configuration sections) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (using wires, radio, or the like, for example) and using these plural apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, considering, broadcasting, notifying, communicating, forwarding, configuring, reconfiguring, allocating, mapping, and assigning. For example, a functional block (configuration unit) that causes transmission to function may be called as a transmitting unit, a transmitter and the like. In any case, as described above, the implementation method is not particularly limited.

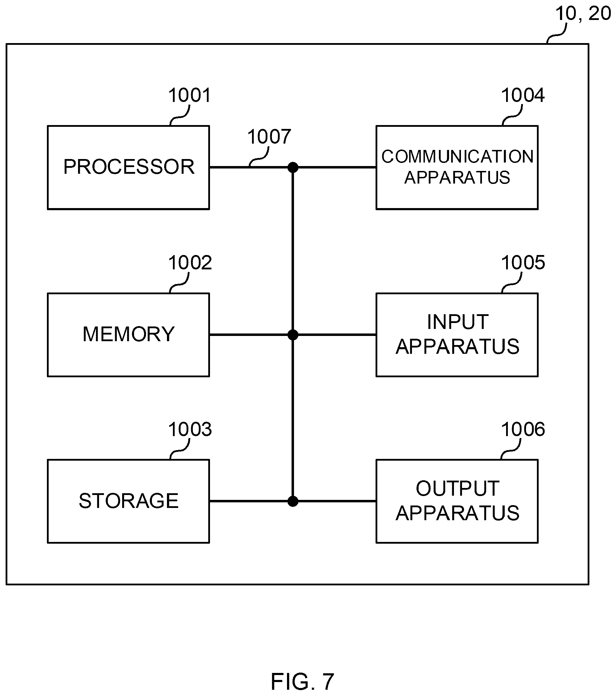

For example, the base station, the user terminal, and the like according to one embodiment of the present disclosure may function as a computer that executes the processing of the radio communication method of the present disclosure. Fig. 7 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more apparatuses illustrated in the drawing, or does not have to include some apparatuses.

For example, although only one processor 1001 is illustrated, a plurality of processors may be included. Further, the processing may be executed by one processor, or the processing may be executed in sequence, or in different manners, by two or more processors. Note that the processor 1001 may be implemented by one or more chips.

Each of functions of the base station 10 and the user terminal 20 is implemented by causing given software (program) to be read on hardware such as the processor 1001 or the memory 1002, thereby causing the processor 1001 to perform operation, controlling communication via the communication apparatus 1004, and controlling at least one of reading and writing of data in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110(210), transmitting/receiving section 120(220), and the like may be implemented by the processor 1001.

Furthermore, the processor 1001 reads programs (program codes), software modules or data, from at least one of the storage 1003 and the communication apparatus 1004, into the memory 1002, and executes various processes according to these. As the program, a program to cause a computer to execute at least a part of the operation described in the above-described embodiment is used. For example, the control section 110(210) may be implemented by a control program that is stored in the memory 1002 and operates in the processor 1001, and another functional block may be implemented similarly.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a register, a cache, a main memory (primary storage apparatus), and the like. The memory 1002 can store executable programs (program codes), software modules and/or the like for implementing the radio communication methods according to embodiments of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus".

The communication apparatus 1004 is hardware (transmitting/receiving device) for allowing inter-computer communication by using at least one of a wired network and a wireless network, and may be referred to as, for example, a network device,, a network controller, a network card, a communication module and so on. The communication apparatus 1004 may be configured by a high frequency switch, a duplexer, a filter, a frequency synthesizer, and the like in order to implement, for example, at least one of frequency division duplex (FDD) and time division duplex (TDD). For example, the transmitting/receiving section 120(220), the transmission/reception antenna 130(230), and the like described above may be implemented by the communication apparatus 1004. The transmitting/receiving section 120(220) may be implemented by physically or logically separating a transmitting section 120a(220a) and a receiving section 120b(220b) from each other.

The input apparatus 1005 is an input device for receiving input from the outside (for example, a keyboard, a mouse, a microphone, a switch, a button, a sensor, and so on). The output apparatus 1006 is an output device for performing outputting to the outside (for example, a display, a speaker, a light emitting diode (LED) lamp, and the like). Note that the input apparatus 1005 and the output apparatus 1006 may be provided in an integrated structure (for example, a touch panel).

Furthermore, these pieces of apparatus, including the processor 1001, the memory 1002, and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. Further, the signal may be a message. The reference signal can be abbreviated as an RS (reference signal), and may be referred to as a pilot, a pilot signal and the like, depending on which standard applies. Furthermore, a component carrier (CC) may be referred to as a cell, a frequency carrier, a carrier frequency, and so on.

Furthermore, a radio frame may be comprised of one or a plurality of periods (frames) in the time domain. Each of one or more periods (frames) constituting a radio frame may be referred to as a subframe. Furthermore, a subframe may be constituted by one or more slots in the time domain. A subframe may be a fixed time duration (for example, 1 ms) not dependent on the numerology.

Here, numerology may be a communication parameter applied to at least one of transmission and reception of a certain signal or channel. Numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, and a specific windowing processing performed by the transceiver in a time domain.

A slot may be comprised of one or a plurality of symbols in the time domain (OFDM (Orthogonal Frequency Division Multiplexing) symbols, SC-FDMA (Single Carrier Frequency Division Multiple Access) symbols, and so on). Also, a slot may be a time unit based on the numerology.

A slot may include a plurality of minislots. Each mini slot may be constituted by one or more symbols in the time domain. Further, a mini slot may be referred to as a subslot. Each mini slot may be constituted by fewer symbols than a slot. A PDSCH (or PUSCH) transmitted in a time unit larger than a mini slot may be referred to as PDSCH (PUSCH) mapping type A. PDSCH (or PUSCH) transmitted using a minislot may be referred to as PDSCH (PUSCH) mapping type B.

A radio frame, a subframe, a slot, a minislot, and a symbol all represent the time unit in signal communication. The radio frame, the subframe, the slot, the mini slot, and the symbol may be each called by other applicable names. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a slot, a minislot and so on, instead of a subframe.

Here, TTI refers to a minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTI is not limited thereto.

The TTI may be a transmission time unit of channel-encoded data packets (transport blocks), code blocks, codewords, or the like, or may be a unit of processing in scheduling, link adaptation, and so on. Note that, when a TTI is given, the period of time (for example, the number of symbols) in which transport blocks, code blocks, codewords, or the like are actually mapped may be shorter than the TTI.

Note that, when one slot or one minislot is referred to as a TTI, one or more TTIs (that is, one or more slots or one or more minislots) may be the minimum time unit of scheduling. Also, the number of slots (the number of minislots) to constitute this minimum time unit of scheduling may be controlled.

TTI having a time length of 1 ms may be referred to as usual TTI (TTI in 3GPP Rel. 8 to 12), normal TTI, long TTI, a usual subframe, a normal subframe, a long subframe, a slot, or the like. TTI shorter than normal TTI may also be referred to as shortened TTI, short TTI, partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

The resource block (RB) is a resource allocation unit in a time domain and a frequency domain, and may include one or more consecutive subcarriers in the frequency domain. The number of subcarriers included in the RB may be the same regardless of the numerology, and may be 12, for example. The number of subcarriers included in the RB may be determined based on numerology.

Further, the RB may include one or more symbols in a time domain, and may have a length of one slot, one mini slot, one subframe, or one TTI. One TTI, one subframe, and the like may be each constituted by one or more resource blocks.

Note that one or a plurality of RBs may be referred to as a physical resource block (PRB (Physical RB)), a subcarrier group (SCG), a resource element group (REG), a PRB pair, an RB pair, and so on.

Furthermore, a resource block may be comprised of one or a plurality of resource elements (REs). For example, one RE may be a radio resource field of one subcarrier and one symbol.

A bandwidth part (BWP) (which may be referred to as a partial bandwidth or the like) may represent a subset of consecutive common resource blocks (RBs) for a certain numerology in a certain carrier. Here, the common RB may be specified by the index of the RB based on a common reference point of the carrier. The PRB may be defined in a certain BWP and may be numbered within the BWP.

The BWP may include BWP for UL (UL BWP) and BWP for DL (DL BWP). For the UE, one or more BWPs may be configured within one carrier.

At least one of the configured BWPs may be active, and the UE need not assume that a given signal/channel is transmitted/received outside the active BWP. Note that "cell", "carrier", or the like in the present disclosure may be replaced with "BWP".

Note that the structures of the radio frame, subframe, slot, mini slot, symbol, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in TTI, the length of a symbol, and the length of a cyclic prefix (CP) can be variously changed.

Further, the information, parameters, and the like described in the present disclosure may be represented using absolute values or relative values with respect to given values, or may be represented using other corresponding information. For example, a radio resource may be instructed by a given index.

The names used for parameters and the like in the present disclosure are in no respect limiting. In addition, an equation and the like using these parameters may differ from those explicitly disclosed in the present disclosure. Since various channels (physical uplink control channel (PUCCH), physical downlink control channel (PDCCH), and the like) and information elements can be identified by any suitable names, various names assigned to these various channels and information elements are not restrictive names in any respect.

The information, signals, and the like described in the present disclosure may be represented by using any one of various different technologies. For example, data, instruction, command, information, a signal, a bit, a symbol, a chip, or the like that may be mentioned throughout the above description may be represented by voltage, current, electromagnetic wave, magnetic field or magnetic particles, optical field or photons, or an arbitrary combination thereof.

Further, information, a signal, and the like can be output in at least one of a direction from a higher layer to a lower layer and a direction from a lower layer to a higher layer. Information, a signal, and the like may be input/output via a plurality of network nodes.

The input/output information, signal, and the like can be stored in a specific location (for example, a memory) or can be managed using a management table. The information, signals and the like to be input and output can be overwritten, updated or appended. The information, signals and the like that are output may be deleted. Information, signals, and the like that have been input may be transmitted to other apparatuses.

Notification of information may be performed not only by using the aspects/embodiments described in the present disclosure but also using another method. For example, notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), or the like), medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message and the like. Further, notification of MAC signaling may be performed using, for example, a MAC control element (MAC CE).

Further, notification of given information (for example, notification of "being X") is not limited to explicit notification but may be performed implicitly (for example, by not performing notification of the given information or by performing notification of another piece of information).

Judging may be performed using values represented by one bit (0 or 1), may be performed using Boolean values represented by true or false, or may be performed by comparing numerical values (for example, comparison with a given value).

Software should be widely interpreted to mean, for example, instructions, instruction sets, codes, code segments, program codes, programs, subprograms, software modules, applications, software applications, software packages, routines, subroutines, objects, executable files, execution threads, procedures, and functions, regardless of whether being referred to as software, firmware, middleware, a microcode, and a hardware description language or by another name.

Further, software, instruction, information, and the like may be transmitted/received via a transmission medium. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. When a base station accommodates a plurality of cells, the entire coverage area of the base station can be partitioned into multiple smaller areas, and each smaller area can provide communication services through base station subsystems (for example, indoor remote radio heads (RRHs)). The term "cell" or "sector" refers to a part or the whole of a coverage area of at least one of a base station and a base station subsystem that perform a communication service in this coverage.

In the present disclosure, the terms such as "mobile station (MS)", "user terminal", "user equipment (UE)", "terminal", and the like can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission apparatus, a reception apparatus, a radio communication apparatus, and the like. Note that at least one of the base station and the mobile station may be a device mounted on a moving object, a moving object itself and the like. The moving object may be a transportation (for example, a car, an airplane and the like), an unmanned moving object (for example, a drone, an autonomous car, and the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminal (which may be referred to as, for example, device-to-device (D2D), vehicle-to-everything (V2X) and the like). In this case, the user terminal 20 may be configured to have the functions of the base station 10 described above. Further, the wording such as "uplink" and "downlink" may be replaced with the wording corresponding to the terminal-to-terminal communication (for example, "side"). For example, the uplink channel, the downlink channel, and the like may be replaced with a side channel.

Similarly, a user terminal in the present disclosure may be replaced with a base station. In this case, the base station 10 may have the functions of the user terminal 20 described above.

In the present disclosure, the operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station), or a combination thereof.

The aspects/embodiments described in the present disclosure may be used individually or in combination, or may be switched in association with execution. Further, the order of processing procedures, sequences, flowcharts, and the like of the aspects/embodiments described in the present disclosure may be re-ordered as long as inconsistencies do not arise. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (New-RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined (for example, a combination of LTE or LTE-A and 5G) and applied.

The phrase "on the basis of" as used in the present disclosure does not mean "on the basis of only", unless otherwise specified. In other words, the phrase "on the basis of" means both "on the basis of only" and "on the basis of at least".

Any reference to an element using designations such as "first" and "second" used in the present disclosure does not generally limit the amount or order of these elements. These designations may be used in the present disclosure as a method convenient in distinguishing between two or more elements. Therefore, reference to the first and second elements does not mean that only two elements are adoptable, or that the first element must precede the second element in some way.

The term "deciding (determining)" used in the present disclosure may encompass a wide variety of operations. For example, "deciding (determining)" may be considered as "deciding (determining)" of judging, calculating, computing, processing, deriving, investigating, looking up, search, or inquiry (for example, looking up in a table, database, or another data structure), ascertaining, and the like.

Further, "deciding (determining)" may be considered as "deciding (determining)" of receiving (for example, receiving information), transmitting (for example, transmitting information), input, output, accessing (for example, accessing data in a memory), and the like.

Further, "deciding (determining)" may be considered as "deciding (determining)" of resolving, selecting, choosing, establishing, comparing, and the like. In other words, "deciding (determining)" may be considered as "deciding (determining)" of some operation.

Further, "deciding (determining)" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

In the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in a radio frequency domain, a microwave domain, and an optical (both visible and invisible) domain, or the like.

In the present disclosure, the phrase "A and B are different" may mean "A and B are different from each other". Note that the phrase may mean that "A and B are different from C". The terms such as "separated", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided for the purpose of exemplification and explanation, and has no limitative meaning to the invention according to the present disclosure.

## Claims

1. User terminal comprising:
a control section that determines a given condition applied to each repetition of repetition transmission based on a set of transmission parameters configured for each repetition and information included in downlink control information instructing the repetition transmission; and
a receiving section that receives a downlink shared channel repeatedly transmitted from one or more transmission/reception points based on the given condition.

2. The user terminal according to claim 1, wherein the transmission parameter includes information that relates to a transmission/reception point corresponding to each repetition and information that relates to a redundancy version in association with each other.

3. The user terminal according to claim 1, wherein the transmission parameter includes information that relates to at least one of quasi co-location, TCI state, precoder, transmission/reception point index, and reference signal index corresponding to each repetition, information that relates to a number of times of repetition, and information that relates to a redundancy version.

4. The user terminal according to any of claims 1 to 3, wherein when a same transmission point is configured for a plurality of repetitions, the control section applies different redundancy versions to the plurality of repetitions.

5. The user terminal according to any of claims 1 to 4, wherein when different transmission points are configured for a plurality of repetitions, the control section applies a same redundancy version to the plurality of repetitions.

6. User terminal comprising:
a control section that determines a given condition applied to each repetition of repetition transmission based on a set of transmission parameters configured for each repetition and information included in downlink control information instructing the repetition transmission; and
a transmitting section that repeatedly transmits an uplink channel to one or more transmission/reception points based on the given condition.
